# EUROPEAN PATENT APPLICATION

(11) **EP 4 686 604 A1**
(43) Date of publication of application: **04.02.2026**
(21) Application number: 25190116.1
(22) Date of filing: 17.07.2025
(51) Int. Cl.: B60P 3/04, A01K 1/00, B60P 7/15

(54) **QUICK RELEASE BREAST BAR**

(30) Priority: 01.08.2024 GB 202411319
(71) Applicant: Smiton Maintenance Limited, Downpatrick County Down BT30 8JN (GB)
(72) Inventor: SMITON, Paul, Downpatrick, BT30 8JN (GB); SMITON, Lisa, Downpatrick, BT30 8JN (GB)
(74) Representative: MacLachlan IP Limited

(57) **Abstract**

The present invention relates to a quick release breast bar for a livestock-travelling vehicle, the quick release breast bar comprising an elongate beam with a hook at one end and a female member at the other end, a detachable male member and a connecting member for fastening the male and female members together.

## Description

The present invention relates to improvements in breast bars for livestock-travelling vehicles such as trailers, horseboxes, lorries and the like, in particular to a quick release breast bar for a horsebox that can be removed in the event of an emergency without the need for specialised tools or equipment.

### Background to the Invention

When traveling livestock, especially horses, vehicles are often equipped with a beam extending across the width of the vehicle at the level of the animal's breast to confine the animal to a particular section of the vehicle by preventing the animal from, for example, kicking the rear door open. This beam also helps to stop the animal travelling forwards and hitting the front of the trailer, e.g., if the driver has to break suddenly.

Such beams are known as breast bars and are usually supported by passing a pair of bolts through opposing sides of a vehicle into opposing ends of the bar. The breast bar is removed by taking out the bolts and lifting the bar upwards.

With known breast bars, it is possible for animals to become lodged over the bar and stuck in the vehicle, for example when an aggravated horse tries to jump over the bar with their front legs, resulting in both the animal and anyone entering the vehicle to free the animal being put in danger the animal will most often kick out or will trash around the vehicle until it finally breaks out. This freeing process can also take a long time, causing more stress to the animal and those involved. Furthermore, serious injury can occur and the process of freeing an animal lodged over a breast bar requires lifting devices and, in some instances, cutting the vehicle apart.

It is therefore an object of the present invention to provide a breast bar which overcomes the drawbacks of known solutions or at least provides a suitable alternative.

### Summary of the Invention

The present invention addresses the problem of breast bar removal from a vehicle when an animal is stuck in the vehicle on the breast bar.

This problem is solved by providing one end of the breast bar with an emergency pin that when pulled allows the bar to be pushed free, thus causing the bar to fall away and the animal being released.

The present invention relates to a breast bar that may be removed quickly and safely without the use of tools or lifting equipment.

The invention is set out in the claims.

Accordingly, a first aspect of the present invention is a quick release breast bar for a livestock-travelling vehicle, the quick release breast bar comprising an elongate beam with a hook at one end and a female member at the other end, a detachable male member and a connecting member for fastening the male and female members together, wherein the female member is provided with a through passage, the detachable male member is provided with an aperture for alignment with the through passage of the female member and the connecting member is for fastening the male and female members together via the aperture and through passage.

The aperture and through passage accept the connecting member such that the connecting member holds the male and female members together during use of the quick release breast bar. To unlock the quick release breast bar, an operator simply pulls the connecting member allowing the quick release breast bar to fall apart.

Advantageously, in one swift action the quick release breast bar may be opened quickly and safely without the use of tools or lifting equipment, keeping the animal it is restraining from becoming stressed and helping to keep the person freeing the animal at a safe position for the duration of the rescue process.

The quick release breast bar is preferably attached to opposing internal walls of a vehicle via receiver brackets attached the opposing internal walls. In use, the hook stops the quick release breast bar from being lifted out of the receiver bracket to which it is attached and allows the bar to remain attached to the vehicle when the connecting member is pulled out, hanging down in a resting position.

Advantageously, the quick release breast bar is simple and easy to use, necessitating operation by one person only.

The quick release breast bar may be a full breast bar, i.e., spanning the full width of a vehicle. In this embodiment, upon release of the connecting member, the bar may be opened by pushing against it. In this embodiment, the quick release breast bar is preferably about 1500mm in length.

Alternatively, the quick release breast bar may be a half bar for connection to the centre partition of a vehicle, e.g., horse box. In this embodiment, upon release of the connecting member, the bar may be pulled apart by opening the centre partition, pushing against the bar, or both. In this embodiment, the quick release breast bar is preferably about 750mm in length.

Advantageously, quick release breast bars according to the invention may be retrofitted to existing livestock-travelling vehicles without modification of the vehicle, i.e., existing breast bars may be swapped for a quick release breast bar according to the invention.

Preferably, the elongate beam is hollow to reduce the weight of the quick release breast bar.

Additionally, or alternatively, the elongate beam is cylindrical. However, this is not to be considered limiting and cuboid beams may also be used.

Additionally, or alternatively, the elongate beam may be made of metal such as aluminium, stainless steel or mild steel, preferably aluminium.

For a full-width quick release breast bar, the elongate beam is preferably in the range of from about 1,350mm to about 1,400mm, e.g., about 1,380 mm.

For a half-width quick release breast bar, the elongate beam is preferably in the range of from about 610mm to about 700mm, e.g., about 630 mm.

Preferably, the hook is attached to the elongate beam by rivets, e.g. stainless stell rivets.

Preferably, the detachable male member comprises a protruding plate with a substantially central transverse aperture for acceptance of the connecting member.

Additionally, or alternatively, the detachable male member is substantially L-shaped.

The detachable male member may be made of metal such as aluminium, stainless steel or mild steel, preferably aluminium.

Preferably, the female member is substantially cylindrical in shape.

Additionally, or alternatively, the female member is provided with a slot for acceptance of the male member, particularly preferably wherein the through passage of the female member is perpendicular to the slot.

Preferably, the female member is attached to the elongate beam by rivets, e.g. stainless stell rivets.

The female member may be made of polymeric material such as high-density polyurethane (HDPU) or metal such as aluminium, stainless steel or mild steel, preferably aluminium.

Preferably, the connecting member is in the form of a pin.

Additionally, or alternatively, the connecting member may be made of metal such as aluminium, stainless steel or mild steel, preferably steel.

Preferably, the quick release breast bar further comprises a removable locking pin to hold the detachable male member in place and stop the bar bouncing out when used on a moving trailer, wherein the detachable male member, preferably a handle of the male member, is provided with an aperture for acceptance of the locking pin. In this embodiment, the connecting member and locking pin are preferably connected, e.g., by a chain.

The locking pin may be made of metal such as aluminium, stainless steel or mild steel, preferably steel.

If an animal gets stuck over the quick release breast bar, there is therefore no need to lift the animal to release it. Nor does the quick release breast bar need to be wrestled or cut for removal from its locked position.

In a preferred embodiment the male member aperture and female member through passage are each independently of substantially circular cross-section. However, this is not to be considered limiting and other cross-sectional shapes, such as hexagonal, are contemplated within the scope of the invention.

Use of the quick release breast bar is not limited to vehicles and breast bars accordingly to the invention may alternatively be fitted to doors or gates in the livestock industry or for crowd management.

The skilled person will understand that where the same feature has been referenced in different aspects of the invention, this feature comprises the same parts and operates in the same way unless otherwise stated.

### Brief Description of the drawings

Certain preferred embodiments of the present invention will now be described, by way of example only, with reference to the accompanying drawings in which:

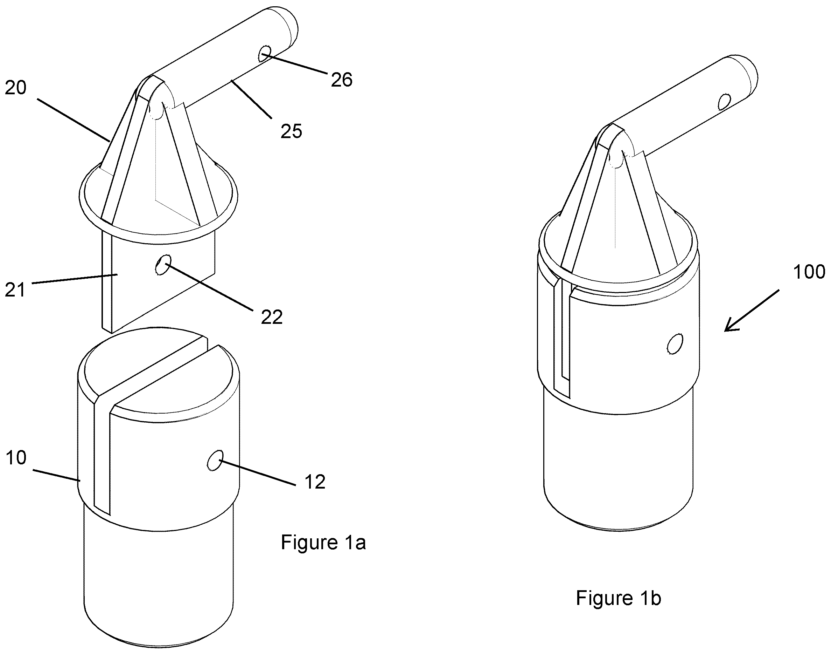

Figure 1a is an exploded perspective view of the male and female members of a preferred quick release breast bar according to the invention;
Figure 1b is a perspective view of the male and female members of Figure 1a;

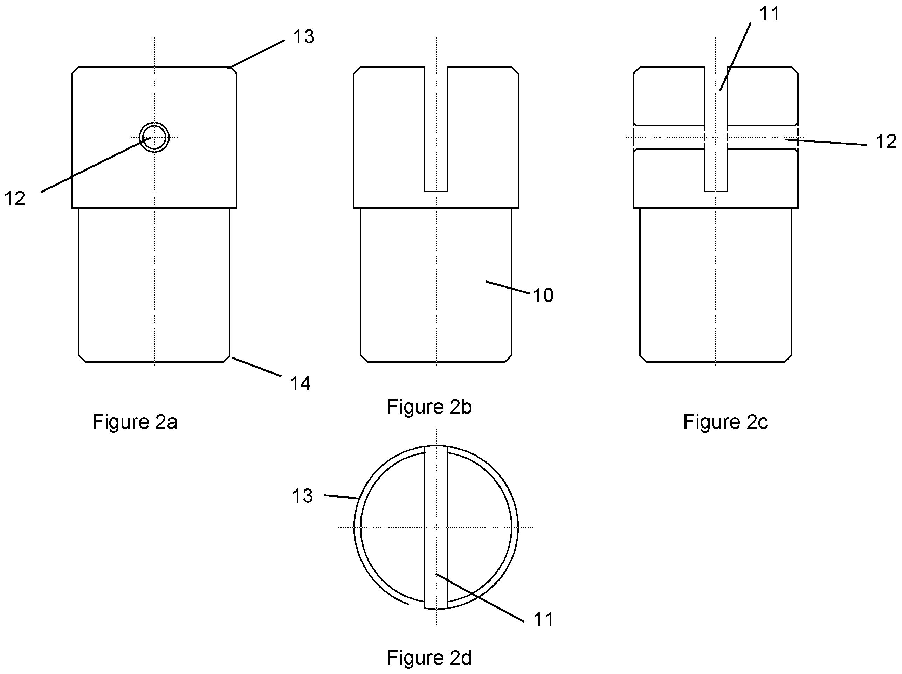

Figures 2a to 2d are plan, side, cross sectional and end views of the female member of Figure 1a, respectively;

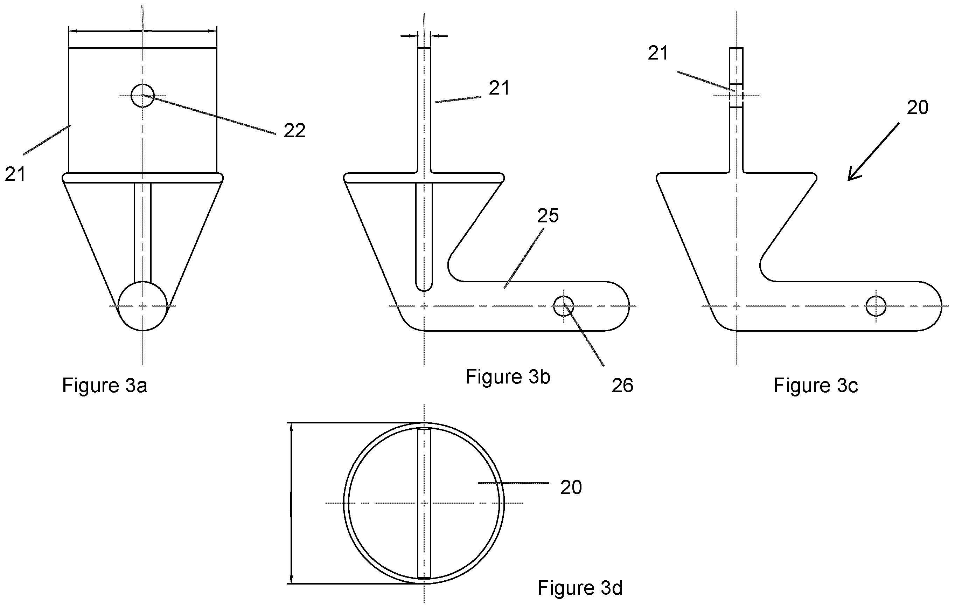

Figures 3a to 2d are plan, side, cross sectional and end views of the male member of Figure 1a, respectively;

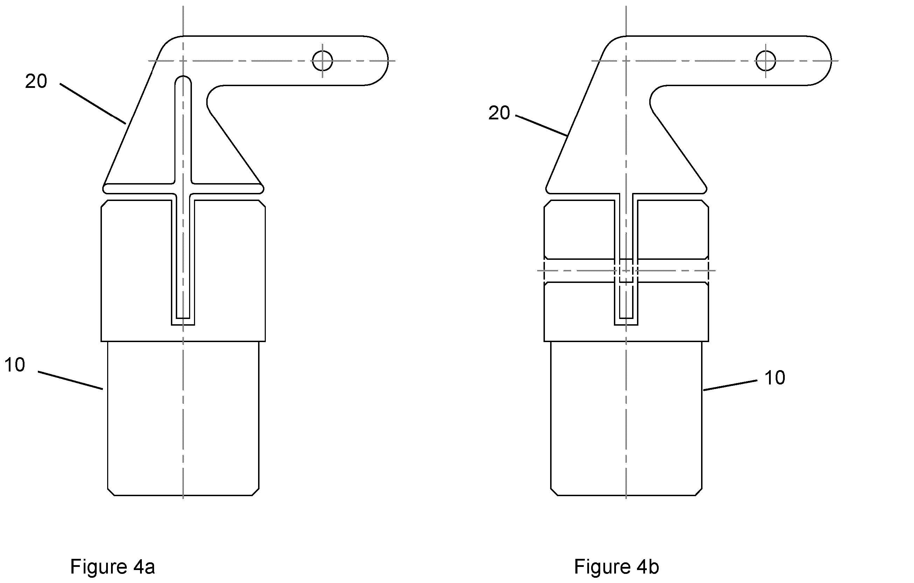

Figures 4a and 4b are cross-sectional views of the male and female members of Figure 1b;

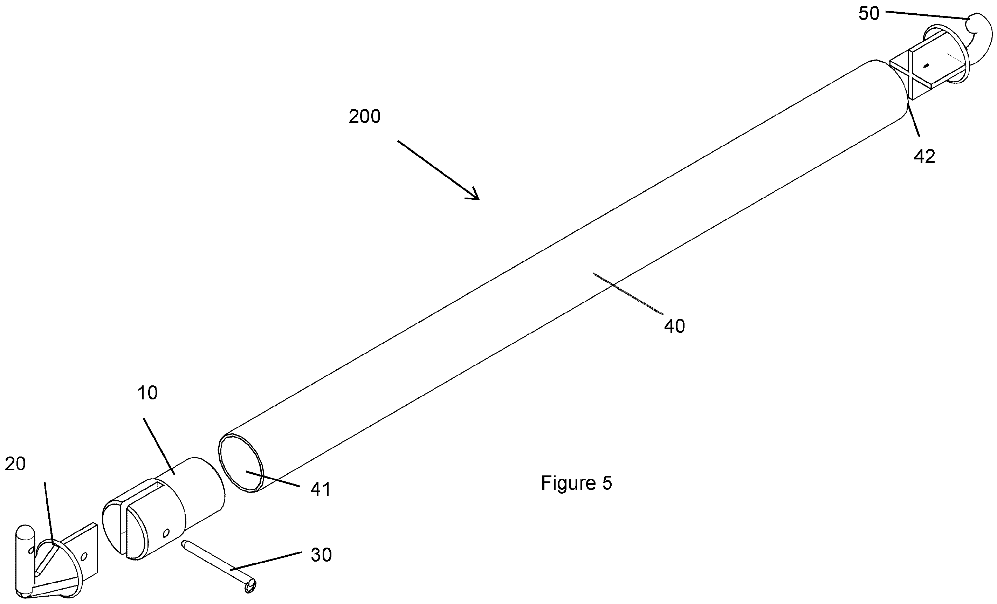

Figure 5 is an exploded perspective view of a preferred breast bar according to the invention;
Figure 6a is a perspective view of the breast bar of Figure 5 and receiver brackets;
Figure 6b is a perspective view of the male member of Figure 5 in place in a receiver bracket; and
Figure 6c is another perspective view of the breast bar of Figure 5 and receiver brackets.

### Detailed Description

In overview, a breast bar with a quick release system is provided.

Various embodiments of the present invention will be described in detail with reference to the drawings, where like reference numerals represent like parts and assemblies throughout the several views.

It will be appreciated that the invention should not be construed to be limited to the examples, which are now described; rather, the invention is construed to include any and all applications provided herein and all equivalent variations within the skill of the ordinary artisan.

Referring to the drawings, there is shown a quick release breast bar according to the invention, generally referred to herein by reference numeral 200 and comprising breast bar quick release system 100, elongate aluminium tube 40 and steel hook 50.

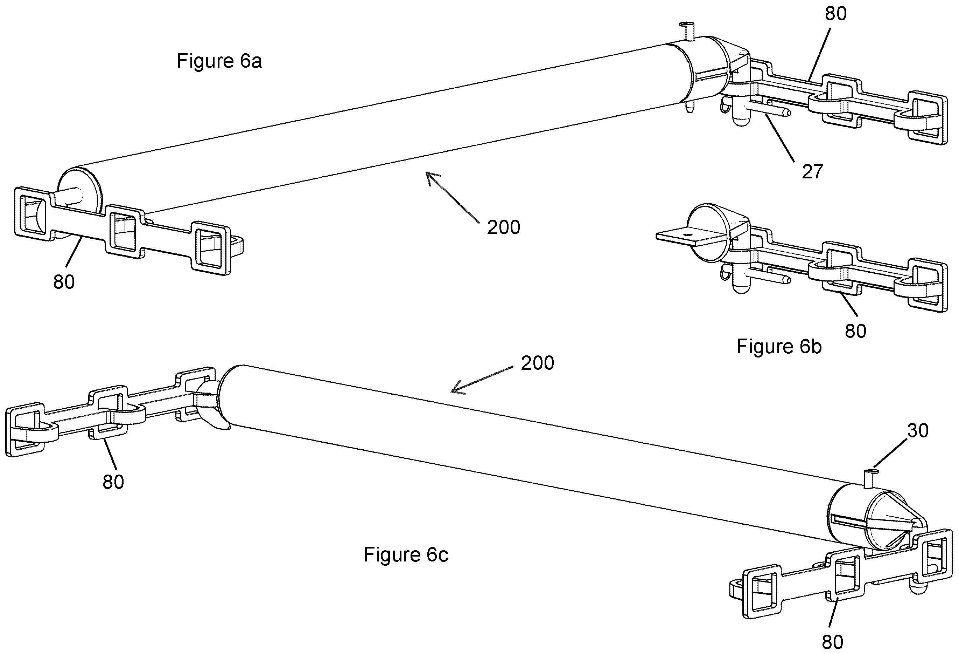

Quick release breast bar 200 is for use with existing breast bar receiver brackets 80 as shown in Figures 6a to 6c.

Hook 50 is located at end 42 of tube 40. Hook 50 allows quick release breast bar 200 to remain attached to receiver brackets 80 of a horse box (not shown) while hanging down in a resting position. When quick release breast bar 200 is positioned up into the lock position as shown in Figure 6c, hook 50 stops quick release breast bar 200 from being lifted out of receiver bracket 80.

Breast bar quick release system 100 is located at end 41 of tube 40 and comprises female member 10, detachable male member 20 and release pin 30.

Detachable male member 20 is provided with protruding plate 21 in which transverse aperture 22 is substantially centrally located for acceptance of release pin 30. Male member 20 is further provided with handle 25 such that male member 20 is substantially L-shaped. Handle 25 is provided with aperture 26 for acceptance of locking pin 27.

Locking pin 27 stops handle 25 from being lifted out whilst quick release breast bar 200 is in the locked position shown in Figure 6a. Locking pin 27 also stops quick release breast bar 200 from bouncing out of the locked position when the trailer (not shown) in which it is installed is traveling along the road.

Female member 10 is substantially cylindrical in shape and provided with slot 11 at end 13 for acceptance of protrusion 21 of male member 20. End 14 of female member 10 is for insertion into tube 40. Female member may be bolted into tube 40 with rivets (not shown) or, if made of metal, welded in place. Transverse aperture 12 of female member 10 is perpendicular to slot 11 for acceptance of pin 30.

Transverse apertures 12, 22 accept pin 30 such that pin 30 holds members 10, 20 together during use of quick release breast bar 200. To unlock quick release system 100 to open quick release breast bar 200, the operator simply pulls release pin 30 allowing quick release breast bar 200 to fall apart, leaving L shaped male member 20 in place.

If an animal (not shown) gets stuck over quick release breast bar 200, there is no need to lift the animal to release it. Nor does quick release breast bar 200 need to be wrestled or cut for removal from its locked position.

In the preferred embodiment shown in the Figures, transverse apertures 12, 22 are of substantially circular cross-section. However, this is not to be considered limiting and other cross-sectional shapes, such as hexagonal or rectangular, are contemplated within the scope of the invention.

It is to be understood that the invention is not limited to the specific details described herein which are given by way of example only and that various modifications and additions are possible without departing from the scope of the invention as defined in the appended claims.

## Claims

1. A quick release breast bar for a livestock-travelling vehicle, the quick release breast bar comprising:
- an elongate beam with a hook at one end and a female member at the other end,
- a detachable male member and
- a connecting member for fastening the male and female members together,
wherein the female member is provided with a through passage, the detachable male member is provided with an aperture for alignment with the through passage of the female member and the connecting member is for fastening the male and female members together via the aperture and through passage.

2. The quick release breast bar as claimed in claim 1, wherein the elongate beam is hollow to reduce the weight of the quick release breast bar.

3. The quick release breast bar as claimed in claim 1 or claim 2, wherein the detachable male member comprises a protruding plate, wherein the aperture is located substantially centrally on the plate and the female member is provided with a slot for acceptance of the plate, wherein the through passage of the female member is perpendicular to the slot.

4. The quick release breast bar as claimed in any one of claims 1 to 3, wherein the connecting member is in the form of a pin.

5. The quick release breast bar as claimed in any one of the preceding claims further comprising a removable locking pin to hold the detachable male member in place, wherein the detachable male member comprises a handle with an aperture for acceptance of the locking pin.
